# EUROPEAN PATENT SPECIFICATION

(11) **EP 2 592 949 B1**
(45) Date of publication and mention of the grant of the patent: **09.07.2014**
(21) Application number: 11738107.9
(22) Date of filing: 11.07.2011
(51) Int. Cl.: A23L 1/052, A23L 1/054, A23L 2/52, A23L 2/54

(54) **CARBONATED JELLY BEVERAGE WITH INCLUSIONS**
KOHLENSÄUREHALTIGES GELEEGETRÄNK MIT EINSCHLÜSSEN
BOISSON GAZEUSE GÉLATINEUSE CONTENANT DES INCLUSIONS

(30) Priority: 13.07.2010 US 363850 P
(43) Date of publication of application: 22.05.2013
(73) Proprietor: PepsiCo, Inc., Purchase, New York 10577 (US)
(72) Inventor: SRIDHAR, Vidya, 411016 Shivajinagar PUNE (IN); BELL, David, Yorktown Heights, NY 10598 (US); MCCORMICK, Casey, Poughquag, NY 12570 (US); LOKRE, Manisha, Piscataway, NJ 08854 (US); BADAOUI NAJJAR, Mohammed Zaki, Valhalla, NY 10595 (US)
(74) Representative: Duxbury, Stephen
(86) International application number: PCT/US2011/043551
(87) International publication number: WO 2012/009273

(56) References cited:
- WO-A1-96/19925
- WO-A1-97/15200
- WO-A1-98/04158
- WO-A2-2009/060314
- FR-A1- 2 885 014
- US-A- 5 456 937

## Description

### FIELD OF THE INVENTION

The present invention relates generally to a carbonated gelatinous beverage and method for making same. More particularly, the present invention relates to a carbonated beverage comprising a soft and easy-to-consume gel having inclusions suspended therein, and a method for making this beverage.

### BACKGROUND OF THE INVENTION

The beverage of the present invention has a soft jelly texture than enhances the fun experience of drinking a beverage. The beverage further contains inclusions such as beads or fruit bits. The soft jelly texture beverage with such inclusions is drinkable using a straw.

### BRIEF SUMMARY OF THE INVENTION

The present invention relates to a shelf stable, carbonated, flavored jelly beverage with inclusions suspended uniformly within the beverage. These inclusions include, without limitation, gel beads, fruit pieces, seeds, or processed plant products ranging in size between 0.1mm to 10.0mm. The inclusions in the beverage vary anywhere from about 0.1 to about 1.5% on wt/wt basis. The present invention is further directed to methods for making this beverage.

### BRIEF DESCRIPTION OF THE DRAWINGS

Figure 1 is an exemplary process flow diagram of a process for making the beverage of the present invention
Figure 2 is a second exemplary process flow diagram of a process for making the beverage of the present invention.

### DETAILED DESCRIPTION OF THE INVENTION

The present invention relates to a carbonated gelatinous beverage. More specifically, the present invention relates to soft jelly textured drinkable beverage containing gum and additional ingredients including, but not limited to, food-grade acid(s), ion sequestering agent(s), calcium source(s), bulking agent(s), nutritive and non-nutritive sweetener(s), preservative(s), color(s), flavor(s), functional ingredient(s), or combinations of these ingredients.

Gums that may be used in the gum-based gel include, but are not limited to: carrageenan, locust bean gum, xanthan gum, gellan, pectin, carboxy methyl cellulose, and combinations thereof.

The gum-based gel may also include at least one ion sequestering agent such as sodium citrate or potassium citrate and at least one source of calcium such as calcium disodium edetate, calcium citrate, calcium lactate, calcium chloride, and calcium carbonate. The gum-based gel may also include at least one bulking agent such as sucrose, maltodextrin, dextrin, and pectin, and at least one food-grade acid such as citric acid, ascorbic acid, acidic acid, acetic acid, lactic acid, formic acid, oxalic acid, tartaric acid, fumaric acid, malic acid, and phosphoric acid.

Additionally, or alternatively, the gum-based gel may also include at least one sweetener (nutritive and/or non-nutritive), at least one color, at least one flavor, at least one functional ingredient or combinations thereof. Examples of such nutritive, and non-nutritive sweeteners include without limitation, to sucrose, high fructose corn syrup, fructose, dextrose, sucralose, aspartame, acesulfame K, saccharin, cyclamate, alitame, natural sweeteners such as honey, agave, and all brands of stevia (Reb A extract). One of ordinary skill in the art at the time of the invention would appreciate that other sweeteners may be used in accordance with the present invention. Functional ingredients may include vitamins and antioxidants.

At least one preservative may be added to the beverage base. These preservatives include, but are not limited to, calcium disodium edetate, sodium hexa meta phosphate, benzoic acid, sorbic acid, potassium sorbate, sodium benzoate, potassium cinnamate, lauric arginate (mirenat) and combinations thereof. The pH of the jelly beverage with inclusions is from about 3 to about 4, generally between 3.2 and 3.6, such as 3.4.

Additional ingredients such as food-grade colors derived from both natural and artificial sources of color consisting (Yellow 5, Yellow 6, Red 40, Blue 1, cochineal extract, beta carotene, fruit based colors such as mango orange, vegetable based colors, lycopene, natural blue and combinations thereof), and flavors and flavor modifiers (lime, lemon, orange, grapefruit; strawberry, blueberry, josta berry, fruit, cherry, malt, beer, chocolate, coffee, tea, acai, pomegranate, hibiscus, tamarind, mango, peach, pineapple, melon, watermelon, insoluble colors, taste modifier and combinations thereof) may also be added to the beverage base in accordance with the present invention.

Inclusions may include, without limitation, microspheres, gel beads, fruit pieces, seeds, or processed plant products. The gel beads could be made with agar, alginate, pectin, wax, carboxymethylcellulose, guar, cellulose or combinations of one or more of such ingredients. The beads can be of generally consistent size or vary in size, and range in size between 0.1mm to 10mm, for example about 0.1mm to about 5mm. These inclusions may be colored, flavored, contain filler ingredients such as silica, preservatives, acid, functional ingredients such as vitamins or antioxidants, fiber and combinations of these ingredients.

Fruit inclusions include, without limitation, real fruit pieces, fruit peels (grapefruit, lemon, orange) fruit pulp (orange, lemon, grapefruit), fruit zest (lemon, orange) or processed fruit meat from berries, tropical fruits, citrus and combinations of these fruits. Other inclusions include without limitation coconut meat, black pepper, basil seed, fennel seed, ginger, wild starch pearls, tapioca pearl, mint leaves, kalamansi peels, fennel root, and combinations of these ingredients. The inclusions may be of generally consistent size or vary in size and range in size from about 0.1mm to 5mm in dimensions. The fruit bits could be colored, flavored, and/or contain functional ingredients as listed above.

In one aspect of the present invention, The carbonated gelatinous beverage with inclusions is prepared by introducing the gum in combination with a source of calcium ion, a bulking agent, such as sucrose, an ion sequesterant, and at least one preservative into a mixer. The gum is hydrated in hot water for about 5-20 minutes at a temperature of about 82-104°C (180-220° F), such as 5 minutes at 93-99°C (200-210° F), to create a hydrated gum mixture. The remaining ingredients (such as food-grade acid, color) are added to the hot gum mixture (200-210°F 93-99°C) Citric acid is then added and the mixture is cooled to 43-52°C (110-125°F). Flavor and inclusions are added while the mixture is cooling (<38°C or <100°F). The amount of gum in the final product ranges from about 0.005% to 0.05% w/v, for example, about 0.01% to about 0.035% w/v of gum may be present in the final product. Finally, the beverage is carbonated and filled into packaging. Alternatively, the inclusions may be added to the beverage after carbonating the beverage.

In another aspect of the present invention, the gum is hydrated first by high shearing the mixture at a speed of about 1000-2000 rpm for 5-20 minutes in hot water 52-63°C (125-145°F), such as 5 minutes at 60°C (140°F). The high sheared gum is additionally hydrated in hot water for about 5-20 minutes at a temperature of about 66-104°C (150-220°F), such as 5 minutes at 93-99°C (200-210° F). The remainder of the ingredients (such as acid, color) are added to hot gum mixture (200-210°F 93-99°C). Citric acid is then added and mixture is cooled to 43-52°C (110-125°F). Flavor and inclusions are added while mixture is cooling ("38°C or" <100°F). Finally, the beverage is carbonated and filled into packaging (batched to beverage with a beverage throw of (1+0)).

In yet another aspect of the present invention, the beverage could be batched as a syrup and carbonated water could be used to throw the syrup into beverage strength. This throw could vary anywhere between (1+4) through (1+1). Upon cooling the jelly texture develops over time that helps with suspension of beads and providing the fun experience of drinking a beverage with inclusions.

Examples of several aspects of the present invention are as follows:

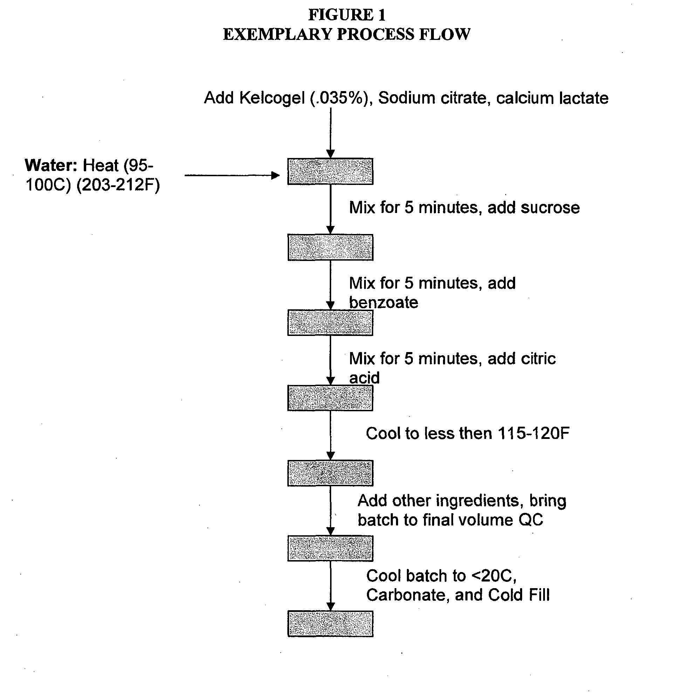

As shown in Figure 1, water is heated to 93-99°C (200-210°F) and gellan gum is added slowly to the hot water. Next, sodium citrate and calcium lactate are added to the mixture and mixed for about 5 minutes. Sucrose is then added to the mixture and mixed for about 5 minutes followed by addition of sodium benzoate which is once again mixed for 5 minutes. Lastly, citric acid is added to the mixture. Cold water is then added to the mixture to cool the mixture to 46-49°C (115-120°F) until the mixture is cooled to about 18°C (65°F). Flavors and inclusions are added to the mixture, during cooling or after the mixture has cooled to less than about 38°C (100°F). The cooled mixture is then carbonated and filled into containers. Alternatively, the inclusions may be added after carbonating the beverage.

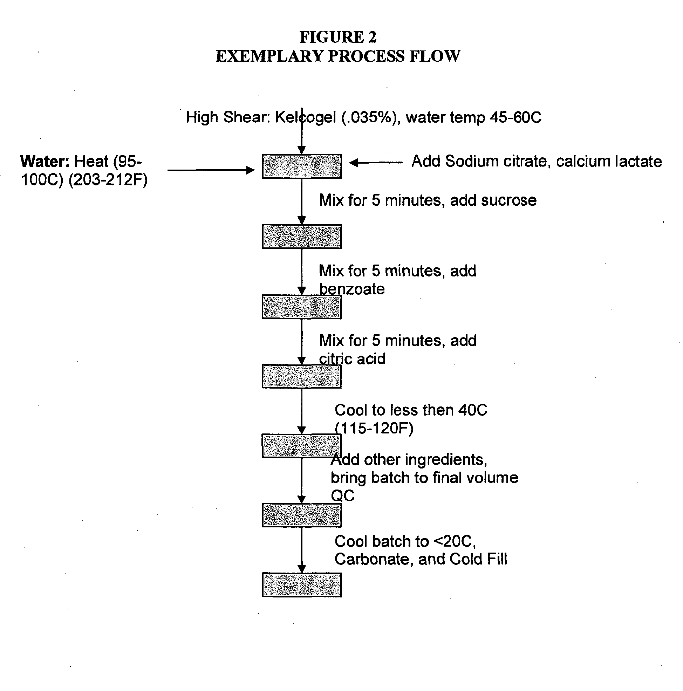

As shown in Figure 2, the carbonated gelatinous beverage may also be prepared using high shear processing. For example, water is heated to about 57-63°C (135-145°F). The gellan gum is added to the heated water while high shearing the mixture. This mixture is subjected to high shear (about 1,600 rpm) for about 5 minutes. Next, this gum mixture is added to water heated to 93°C (200°F). Sodium citrate and calcium lactate are then added to the mixture and mixed for 5 minutes, followed by the addition of sucrose (mixed for 5 minutes) and then sodium benzoate (mixed for 5 minutes). Lastly, citric acid is added to the mixture. Cool water is then added to the mixture to cool the mixture to 46-49°C (115-120°F) and the mixture is further cooled to about 18°C (65°F). Flavors and inclusions are added to the mixture during cooling or after the mixture has cooled to less than about 38°C (100°F). This mixture is then carbonated and filled into containers. Alternatively, the inclusions may be added after carbonating the beverage.

Exemplary product formulas of the present invention are as follows:

### Example 1:

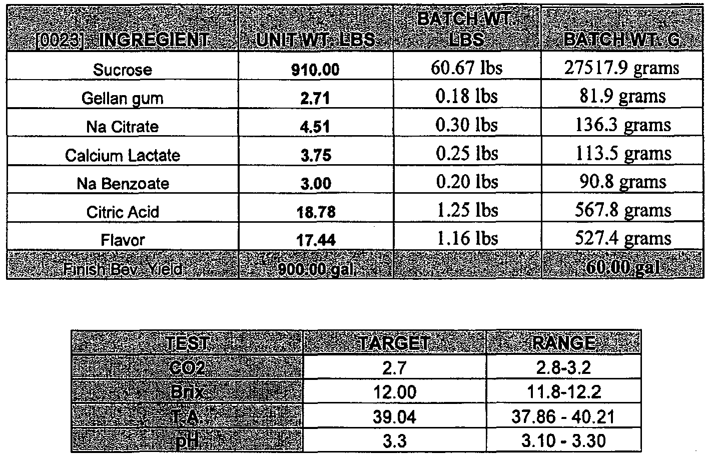

### Example 2:

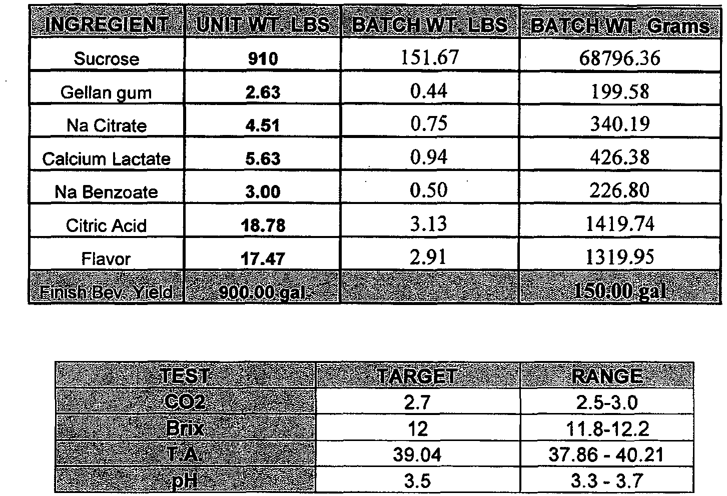

### Example 3 (reduced sugar compared to Examples 1 and 2):

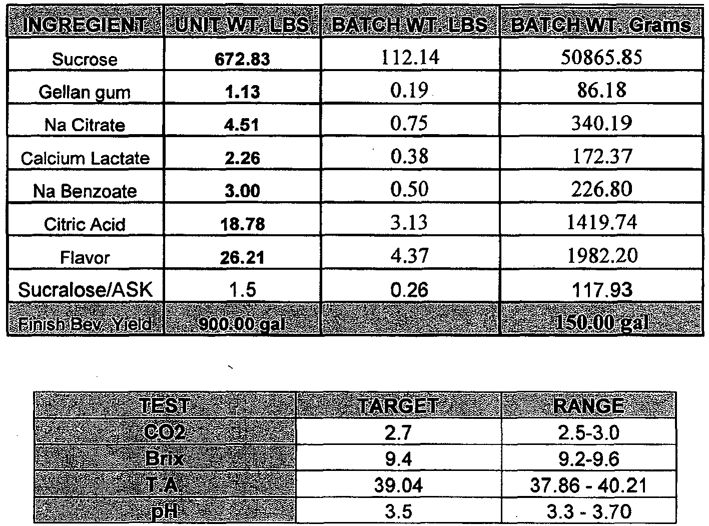

## Claims

1. A carbonated gelatinous beverage comprising:
carbonated water and gum, wherein the water and gum form a soft jelly texture;
and inclusions having a size of from about 0.1 mm to about 5 mm in dimension suspended in a gelatinous beverage.

2. The carbonated gelatinous beverage of claim 1 wherein the gum is selected from carrageenan, locust bean gum, xanthan gum, gellan, pectin, carboxy methyl cellulose, and combinations thereof.

3. The carbonated gelatinous beverage of claim 1 wherein the gum is gellan gum.

4. The carbonated gelatinous beverage according to any of the preceding claims further comprising at least one of food-grade acid(s), ion sequestering agent(s), calcium source(s), bulking agent(s), nutritive and non-nutritive sweetener(s), preservative(s), color(s), flavor(s), functional ingredient(s), or combinations of these ingredients.

5. The carbonated gelatinous beverage of any of the preceding claims wherein the inclusions are microspheres or gel beads or wherein the inclusions are fruit pieces.

6. The carbonated gelatinous beverage according to any of the preceding claims wherein the beverage is drinkable from a straw.

7. The carbonated gelatinous beverage according to any of the preceding claims wherein the amount of gum in the final beverage is about 0.005% to 0.05% w/v of the final beverage

8. A method of forming a carbonated gelatinous beverage with inclusions comprising
a) mixing a gum, a source of calcium ion, a bulking agent, an ion sequesterant, and at least one preservative to form a mixture,
b) hydrating the mixture in hot water for about 5-20 minutes at a temperature of about 82-104°C (180-220° F), to create a hydrated gum mixture,
c) adding at least one of an acid or color and heating the resulting mixture to 93-99°C (200-210°F),
d) adding citric acid and cooling the mixture to 43-52°C (110-125°F),
e) adding flavor and inclusions during cooling to <38°C (<100°F) to form a beverage, and
f) carbonating the beverage.

9. A method of forming a carbonated gelatinous beverage with inclusions comprising
a) adding gum to water heated to 52-63°C (125-145°F) and mixing at high shear at a speed of about 1000-2000 rpm for 5-20 minutes to hydrate the gum,
b) adding additional hot water and allowing the high sheared gum to further hydrate for about 5-20 minutes at a temperature of 82-104°C (180-220°F),
c) adding at least one of an acid or color and heating the resulting gum mixture to 93-99°C (200-210°F),
d) adding citric acid and cooling the mixture to 43-52°C (110-125°F),
e) adding flavor and inclusions during cooling <38°C (<100°F) to form a beverage, and
f) carbonating the beverage.

10. A method of forming a carbonated gelatinous beverage with inclusions comprising:
a) adding gum to water heated to 52-63°C (125-145°F) and mixing at high shear at a speed of about 1000-2000 rpm for 5-20 minutes to hydrate the gum,
b) adding additional hot water and allowing the high sheared gum to further hydrate for about 5-20 minutes at a temperature of about 82-104 °C (180-220° F),
c) adding at least one of an acid or color and heating the resulting gum mixture to 93-99°C (200-210°F),
d) adding citric acid and cooling the mixture to 43-52°C (110-125°F),
e) adding flavor during cooling <38°C (<100°F) to form a beverage,
f) carbonating the beverage, and
g) adding inclusions to the carbonated beverage.

## Patentansprüche

1. Kohlensäurehaltiges Geleegetränk, umfassend:
kohlensäurehaltiges Wasser und Gummi, wobei das Wasser und der Gummi eine weiche Gelee-Textur bilden;
und Einschlüsse mit einer Größe im Ausmaß von ungefähr 0,1 mm bis ungefähr 5 mm, suspendiert in einem Geleegetränk.

2. Kohlensäurehaltiges Geleegetränk gemäß Anspruch 1, wobei der Gummi ausgewählt ist aus Carrageen, Johannisbrotkernmehl, Xanthan, Gellan, Pektin, Carboxymethylcellulose, und Kombinationen davon.

3. Kohlensäurehaltiges Geleegetränk gemäß Anspruch 1, wobei der Gummi Gellan-Gummi ist.

4. Kohlensäurehaltiges Geleegetränk gemäß irgendeinem der vorhergehenden Ansprüche, ferner umfassend mindestens eines ausgewählt aus Säure(n), Ionen-Komplexbildner(n), Kalziumquelle(n), Füllstoff(en), nutritiven(m) und nichtnutritiven(m) Süßstoff(en), Konservierungsmittel(n), Farbe(n), Aroma(Aromen), funktionalem (funktionalen) Inhaltsstoff(en), in Lebensmittelqualität, oder Kombinationen dieser Inhaltsstoffe.

5. Kohlensäurehaltiges Geleegetränk gemäß irgendeinem der vorhergehenden Ansprüche, wobei die Einschlüsse Mikrokugeln oder Gelkugeln sind, oder wobei die Einschlüsse Fruchtstücke sind.

6. Kohlensäurehaltiges Geleegetränk gemäß irgendeinem der vorhergehenden Ansprüche, wobei das Getränk aus einem Strohhalm trinkbar ist.

7. Kohlensäurehaltiges Geleegetränk gemäß irgendeinem der vorhergehenden Ansprüche, wobei die Menge an Gummi in dem fertigen Getränk ungefähr 0,005 Gew.-% bis 0,05 Gew.-% des fertigen Getränks beträgt.

8. Verfahren zur Bildung eines kohlensäurehaltigen Geleegetränks mit Einschlüssen, umfassend
a) Mischen eines Gummis, einer Kalziumionen-Quelle, eines Füllstoffes, eines Ionen-Komplexbildners, und mindestens eines Konservierungsmittels, um eine Mischung zu bilden,
b) Anfeuchten der Mischung in heißem Wasser für ungefähr 5-20 Minuten bei einer Temperatur von ungefähr 82-104°C (180-220°F), um eine angefeuchtete Gummi-Mischung zu schaffen,
c) Hinzufügen von mindestens einem einer Säure oder Farbe und Erhitzen der resultierenden Mischung auf 93-99°C (200-210°F),
d) Hinzufügen von Zitronensäure und Abkühlen der Mischung auf 43-52°C (110-125°F),
e) Hinzufügen von Aroma und Einschlüssen während des Abkühlens auf <38°C (<100°F), um ein Getränk zu bilden, und
f) Karbonisieren des Getränks,

9. Verfahren zur Bildung eines kohlensäurehaltigen Geleegetränks mit Einschlüssen, umfassend
a) Hinzufügen von Gummi zu Wasser, erhitzt auf 52-63°C (125-145°F), und Mischen bei hoher Scherung bei einer Geschwindigkeit von ungefähr 1000-2000 rpm für 5-20 Minuten, um den Gummi anzufeuchten,
b) Hinzufügen von zusätzlichem heißem Wasser und Ermöglichen, dass der bei hoher Scherung gemischte Gummi für ungefähr 5-20 Minuten bei einer Temperatur von ungefähr 82-104°C (180-220°F) weiter anfeuchtet,
c) Hinzufügen von mindestens einem einer Säure oder Farbe, und Erhitzen der resultierenden Gummimischung auf 93-99°C (200-210°F),
d) Hinzufügen von Zitronensäure und Abkühlen der Mischung auf 43-52°C (110-125°F),
e) Hinzufügen von Aroma und Einschlüssen während des Abkühlens <38°C (<100°F), um ein Getränk zu bilden, und
f) Karbonisieren des Getränks.

10. Verfahren zur Bildung eines kohlensäurehaltigen Geleegetränks mit Einschlüssen, umfassend:
a) Hinzufügen von Gummi zu Wasser, erhitzt auf 52-63°C (125-145°F), und Mischen bei hoher Scherung bei einer Geschwindigkeit von ungefähr 1000-2000 rpm für 5-20 Minuten, um den Gummi anzufeuchten,
b) Hinzufügen von zusätzlichem heißem Wasser und Ermöglichen, dass der bei hoher Scherung gemischte Gummi für ungefähr 5-20 Minuten bei einer Temperatur von ungefähr 82-104°C (180-220°F) weiter anfeuchtet,
c) Hinzufügen von mindestens einem einer Säure oder Farbe, und Erhitzen der resultierenden Gummimischung auf 93-99°C (200-210°F),
d) Hinzufügen von Zitronensäure und Abkühlen der Mischung auf 43-52°C (110-125°F),
e) Hinzufügen von Aroma während des Abkühlens <38°C (<100°F), um ein Getränk zu bilden,
f) Karbonisieren des Getränks, und
g) Hinzufügen von Einschlüssen zu dem kohlensäurehaltigen Getränk.

## Revendications

1. Boisson gazeuse gélatineuse comprenant :
de l'eau gazeuse et une gomme, dans laquelle l'eau et la gomme forment une texture gélatineuse molle ;
et des inclusions ayant une taille d'environ 0,1 mm à environ 5 mm en dimension en suspension dans une gazeuse gélatineuse.

2. Boisson gazeuse gélatineuse selon la revendication 1 dans laquelle la gomme est choisie parmi la carraghénine, la gomme de caroube, la gomme xanthique, la gomme gellane, la pectine, la carboxyméthylcellulose et les combinaisons de ceux-ci.

3. Boisson gazeuse gélatineuse selon la revendication 1 dans laquelle la gomme est la gomme gellane.

4. Boisson gazeuse gélatineuse selon l'une quelconque des revendications précédentes comprenant en outre au moins l'un d'un ou plusieurs acides de qualité alimentaire, agents séquestrants d'ions, sources de calcium, diluants, édulcorants nutritifs et non nutritifs, agents de conservation, colorants, arômes, ingrédients fonctionnels ou des combinaisons de ces ingrédients.

5. Boisson gazeuse gélatineuse selon l'une quelconque des revendications précédentes dans laquelle les inclusions sont des microsphères ou des billes de gel ou dans laquelle les inclusions sont des morceaux de fruits.

6. Boisson gazeuse gélatineuse selon l'une quelconque des revendications précédentes dans laquelle la boisson peut être bue à la paille.

7. Boisson gazeuse gélatineuse selon l'une quelconque des revendications précédentes dans laquelle la quantité de gomme dans la boisson finale est d'environ 0,005 % à 0,05 % p/v de la boisson finale.

8. Procédé de préparation d'une boisson gazeuse gélatineuse comportant des inclusions comprenant
a) le mélange d'une gomme, d'une source d'ion calcium, d'un diluant, d'un séquestrant d'ions, et d'au moins un agent de conservation pour former un mélange,
b) l'hydratation du mélange dans de l'eau chaude pendant environ 5 à 20 minutes à une température d'environ 82 à 104 °C (180 à 220 °F), pour créer un mélange de gommes hydraté,
c) l'addition d'au moins l'un d'un acide ou d'un colorant et le chauffage du mélange résultant à une température de 93 à 99 °C (200 à 210 °F),
d) l'addition d'acide citrique et le refroidissement du mélange à une température de 43 à 52 °C (110 à 125 °F),
e) l'addition d'un arôme et d'inclusions au cours du refroidissement à < 38 °C (< 100 °F) pour préparer une boisson, et
f) la gazéification de la boisson.

9. Procédé de préparation d'une boisson gazeuse gélatineuse comportant des inclusions comprenant
a) l'addition d'une gomme à de l'eau chauffée à une température de 52 à 63°C (125 à 145 °F) et le mélange à un cisaillement élevé et à une vitesse d'environ 1 000 à 2 000 tr/min pendant 5 à 20 minutes pour hydrater la gomme,
b) l'addition d'eau chaude additionnelle et l'hydratation supplémentaire de la gomme ayant été soumise à un cisaillement élevé pendant environ 5 à 20 minutes à une température d'environ 82 à 104 °C (180 à 220 °F),
c) l'addition d'au moins l'un d'un acide ou d'un colorant et le chauffage du mélange de gommes résultant à une température de 93 à 99 °C (200 à 210 °F),
d) l'addition d'acide citrique et le refroidissement du mélange à une température de 43 à 52 °C (110 à 125 °F),
e) l'addition d'un arôme et d'inclusions au cours du refroidissement < 38 °C (< 100 °F) pour préparer une boisson, et
f) la gazéification de la boisson.

10. Procédé de préparation d'une boisson gazeuse gélatineuse comportant des inclusions comprenant :
a) l'addition d'une gomme à de l'eau chauffée à une température de 52 à 63 °C (125 à 145 °F) et le mélange à un cisaillement élevé et à une vitesse d'environ 1 000 à 2 000 tr/min pendant 5 à 20 minutes pour hydrater la gomme,
b) l'addition d'eau chaude additionnelle et l'hydratation supplémentaire de la gomme ayant été soumise à un cisaillement élevé pendant environ 5 à 20 minutes à une température d'environ 82 à 104 °C (180 à 220 °F),
c) l'addition d'au moins l'un d'un acide ou d'un colorant et le chauffage du mélange de gommes résultant à une température de 93 à 99 °C (200 à 210 °F),
d) l'addition d'acide citrique et le refroidissement du mélange à une température de 43 à 52 °C (110 à 125 °F),
e) l'addition d'un arôme au cours du refroidissement < 38 °C (< 100 °F) pour préparer une boisson,
f) la gazéification de la boisson, et
g) l'addition d'inclusions à la boisson gazeuse.
